# EUROPEAN PATENT SPECIFICATION

(11) **EP 2 845 439 B1**
(45) Date of publication and mention of the grant of the patent: **06.02.2019**
(21) Application number: 13784894.1
(22) Date of filing: 06.05.2013
(51) Int. Cl.: E01C 19/05, E01C 19/10

(54) **MOBILE MICROWAVE PROCESSING UNIT FOR PAVEMENT RECYCLING AND ASPHALT PAVEMENT PRODUCTION**
MOBILE MIKROWELLENVERARBEITUNGSEINHEIT ZUM STRASSENBELAGSRECYCLING UND ZUR ASPHALTBELAGSHERSTELLUNG
UNITÉ DE TRAITEMENT MOBILE À MICRO-ONDES POUR LE RECYCLAGE DU REVÊTEMENT ROUTIER ET LA PRODUCTION D'UN REVÊTEMENT EN BITUME

(30) Priority: 04.05.2012 US 201261643010 P; 04.05.2012 US 201261643046 P
(43) Date of publication of application: 11.03.2015
(73) Proprietor: ALM Holding Company, Onalaska WI 54650 (US)
(72) Inventor: ELIOT, Mark, Minnetonka, MN 55305 (US)
(74) Representative: Spencer, Michael David
(86) International application number: PCT/US2013/039696
(87) International publication number: WO 2013/166490

(56) References cited:
- EP-A1- 0 529 285
- FR-A1- 2 755 450
- US-A- 5 083 870
- US-A- 5 083 870
- US-A- 5 242 493
- US-B1- 6 186 700
- US-B1- 6 186 700

## Description

### FIELD OF THE INVENTION

The present invention is in the technical field of asphalt production. More particularly, the present invention relates to a mobile asphalt recycling plant for producing a high performance hot mix asphalt product according to the preamble of claim 1 and a method for producing a high performance hot mix asphalt product using a mobile asphalt recycling plant according to claim 8.

### BACKGROUND

Asphalt recycling and reclamation is a process of removing the aged asphalt pavement. The process can removed from about few centimeters (inches) to several centimeters (inches) of asphalt pavement, and can include removing a portion of the base aggregate below the asphalt and crushing it to a particular size. After removal and crushing the material, the product is blended with an asphalt emulsion (in most cases emulation is added at the ratio of about 1.5%-6% by weight), which has performance characteristics that are refined for the particular region and weather conditions.

Reporting from DOT agencies has shown a disconnected rate of success and failures between methods and there is no current national specification to follow for asphalt recycling. DOT agencies, townships, and counties are looking for better more economical ways to prolong pavement life. In recent years hot in place recycling ("HIR") processes have been on the rise in popularity, but these processes suffer from a number of drawbacks. Drawbacks include that fact that the processes are environmental unfriendly, cause pollution, and require large amount of energy to produce the heat necessary for HIR process.

Other processes for pavement recycling exist including: CIR- Cold In-Place Recycling, FDR- Full Depth Recycling, and HIR- Hot In-Place Recycling.

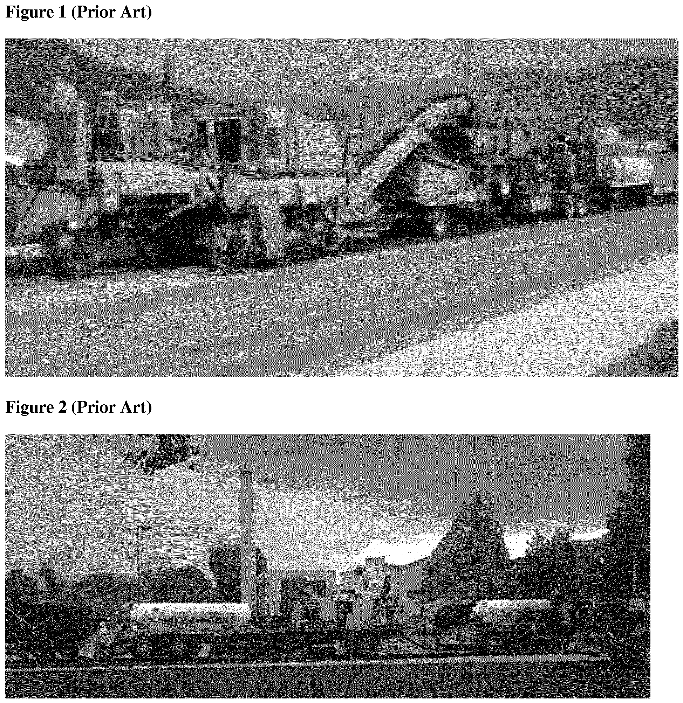

CIR is an eco-friendly pavement rehabilitation process performed without the use of heat and has been a common pavement rehabilitation technique since the early 2000's. The two most common methods of CIR use either an asphalt emulsion or foamed asphalt as a stabilizing agent. Anywhere from 5.1 to 12.7 centimeters (2 to 5 inches) of the current road surface are pulverized down to a specific aggregate size, mixed with the emulsion or foamed asphalt, and are then reused to pave that same road. The equipment used (Figure 1) mills a section of pavement, up to 4.27 m (14 feet) wide, in a single pass, passes it through a mobile crushing and sizing plant, then through a pug mill where the asphalt stabilizer is added, and the final material is windrowed out the back where it is picked up by standard asphalt paving equipment and laid back down over the same road surface. The paving train is approximately 45.72 m (150') in length.

CIR produces a final product that has approximately 10% air voids (compared to 3-7% for hot-mix asphalt) and has approximately 60-80% of the structural value of new hot-mix asphalt (AASHTO layer coefficient of 0.25-0.28 vs. 0.35-0.44 for hot-mix). Thus, the final product has substantially less integrity of the original, and is inferior in quality to new asphalt pavement in terms of strength and longevity.

FDR is similar in nature to CIR, although typically the process recycles more base material, where normally 5.1 cm (2 plus inches) of base is pulled up and included in the recycling process.

HIR is also a similar process, consisting of four steps: (1) softening of the pavement surface with heat; (2) mechanical removal of the surface material; (3) mixing of the material with recycling agent and/or virgin aggregate and asphalt binder; and (4) laydown and paving of the recycled mix on the pavement surface. The equipment used to perform HIR is approximately 61 meters (200 feet) or more in length, including the preheaters, scarifier, and mixing equipment. HIR is typically limited to recycling only the upper 2.54 to 5.1 centimeters (1 to 2 inches) of a pavement. There is no published research available regarding the structural value of HIR pavement, however because of the process used, it is likely equivalent or slightly better than CIR, but still not the equivalent of new asphalt pavement. The equipment required to produce HIR utilizes a significant amount of heat to soften the pavement. The pavement is typically scarified after heating rather than being milled, which results in a less defined pavement edge compared to CIR - leaving a less finished final product. The heat is typically generated by an infrared heater that uses propane as a fuel source (Heat Master 16 is most commonly used). According to the manufacturer's specifications, the HM-16 has a total watts (BTU/hr.) output per main panel of 2410 kW (8,222,000 BTU/hr.) x two = 4820 kW (16,444,000 BTU/hr.) because of the direct application of high heat to the pavement, it is possible that the asphalt binder is aged and thereby hardened, reducing the ability of the final product to resist thermal cracking.

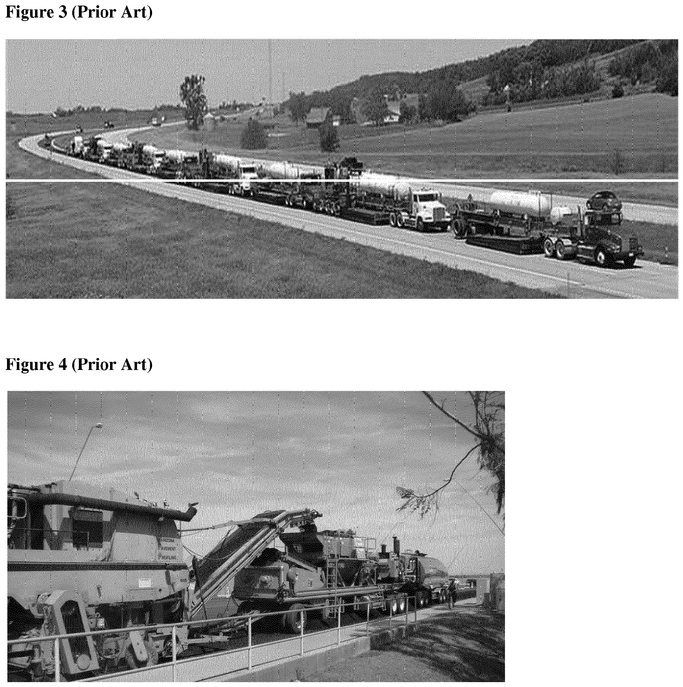

These pavement rehabilitation approaches are best suited to long sections of pavement, because of the size of the reclaiming equipment trains, as shown in Figure 2. HIR equipment trains can be quite large (Figure 3).

The growing traffic demands on our nation's roadways over that past couple of decades, decreasing budgetary funds, and the need to provide a safe, efficient, and cost effective roadway system has led to a dramatic increase in the need to rehabilitate our existing pavements. The last 25 years has also seen a dramatic growth in asphalt recycling and reclaiming as a technically and environmentally preferred way of rehabilitating the existing pavements. Asphalt recycling and reclaiming need to be improved to meet all of our societal goals of providing safe, efficient roadways, at the same time there need to be drastic reductions in both the environmental impact and energy (oil) consumption compared to conventional pavement reconstruction. The period of rapid expansion of roadway networks through new construction has peaked, the existing roadway infrastructure has aged, and a significant number of roadways are nearing the end of their useful service life. Limited funding and demands on existing resources have shifted the emphasis from new construction to preservation and/or extending the service life of the existing roadways. The implementation of more timely or proactive preventative maintenance and rehabilitation treatments is being used as a means of preserving the existing roadway infrastructure.

Although, these prior art technologies are more environmentally sound and cost effective, their implementation has not been accepted widely due to lack of knowledge and awareness of their benefits as well as hesitation on the part of some agencies to try new strategies. In some cases, improper design and construction techniques that resulted in premature failures impeded the progress of these technologies. Such barriers hamper the efforts of marketing and promotion of innovative and improved recycling strategies. The following is a list of some barriers that have impeded the implementation of in-place recycling: lack of experience and technical expertise; non-availability of local contractors; lack of local support from the asphalt industry; difficulties in leaving the comfort zone; biases and misconceptions; past pre-mature failures; lack of clear guidance on proper usage and process control; inconsistent specifications; lack of awareness to cost-effectiveness; air quality concerns regarding HIR; large expense of recycling equipment; concerns regarding the adequacy of the structural capacity; many emulsions used need to "cure" up to a week before the final hot-mix asphalt ("HMA") or alternate wear coarse is installed, which causes a substantial delay in construction and in some cases a double mobilization of the construction equipment increasing costs and duration of construction; the engineered emulsions and foamed emulsions have inconsistent success rates throughout the country which has caused a lack of willingness of some agencies to participate in this cost savings process; a significant amount of lab testing is required for new emulsion mix designs prior to project specification and bidding. Based on the current success rate this is a deterrent; the HIR process consumes a tremendous amount of energy to be effective; and although existing recycling methods add life to aged pavement they fall short of new HMA overall performance criteria.

Thus, a need exists for an improved asphalt recycling product and method that does not suffer from the drawbacks and disadvantages of the prior art. In US 6 186 700, multiple hammermills are used for processing the shingles and the injection of the material with an emulsion is performed after heating. Other configurations of this process are proposed in EP 0 529 285, US 5 083 870 and FR 2 755 450.

### SUMMARY OF THE INVENTION

An object of the present invention is to provide a mobile asphalt recycling plant for producing a high performance hot mix asphalt product according to claim 1 and a method for producing a high performance hot mix asphalt product using a mobile asphalt recycling plant according to claim 8.

Further preferred embodiments are defined by the features of dependent claims 2-7.

These and other objects of the present invention will become apparent to those skilled in the art upon reference to the following specification, drawings, and claims.

### BRIEF DESCRIPTION OF THE DRAWINGS

Figure 1 shows a CIR equipment train moving down a roadway.
Figure 2 shows a portion of a HIR equipment train.
Figure 3 shows a HIR equipment train equipment train moving down the roadway heating up the pavement with direct flame derived from the large fuel tanks located on top of the trailers being pulled.
Figure 4 shows a CIR train injecting engineered emulsion ahead of the pick-up machine and the paver.
Figure 5 shows a pick-up machine and the paver, where the present invention will be placed therebetween.
Figure 6 shows the MLEHS.
Figure 7 shows the MLEHS.
Figure 8 shows the MLEHS.
Figure 9 shows the MLEHS.
Figure 10 shows the MLEHS.
Figure 11 shows a graph.

### DETAILED DESCRIPTION OF THE INVENTION

The present invention is directed at overcoming the problems associated with the current recycling methods in an effort to provide a better pavement performance solution with an economic and energy savings. The invention processes the recycled asphalt during or after the emulsion blending stage is complete in a standard CIR or FDR recycling equipment train and rapidly heats the material using a microwave system that includes a minimum of four microwave transmitter units with a splitter/wave guides that direct microwave energy from each transmitter into two rotary head heating chambers using about 2.4 or 915 MHz. The microwave process is referred herein as low energy heating system ("LEHS") or mobile low energy heating system ("MLEHS"). Using the microwaves in a series gives the ability to cycle the power and intensity to achieve the best heating results over a controlled surface. Another possible configuration for conveyance of microwave energy is through a tube or stainless steel pipe using a stainless steel auger (or such other materials that are suitably resistant to damage from microwave energy) while using wave guides to split the microwave energy from each transmitter and direct the energy into the chamber from multiple sides.

The microwave unit has the proper shielding to protect the operators and provide the adequate amount of heat to the material to achieve temperatures of about 105 to 171 degrees Celsius (220 to 340 degrees Fahrenheit) while traveling through the MLEHS processor. The correct heat is applied while the material is conveyed through the MLEHS heating chambers and is critical to soften the limited asphalt emulsion binder present in the aged asphalt so it blends with the new asphalt emulsion. The finished material is dropped in the paver at the required temperature to provide the best compaction and fusion between the remaining asphalt existing in the aged pavement and the new emulsion being introduced.

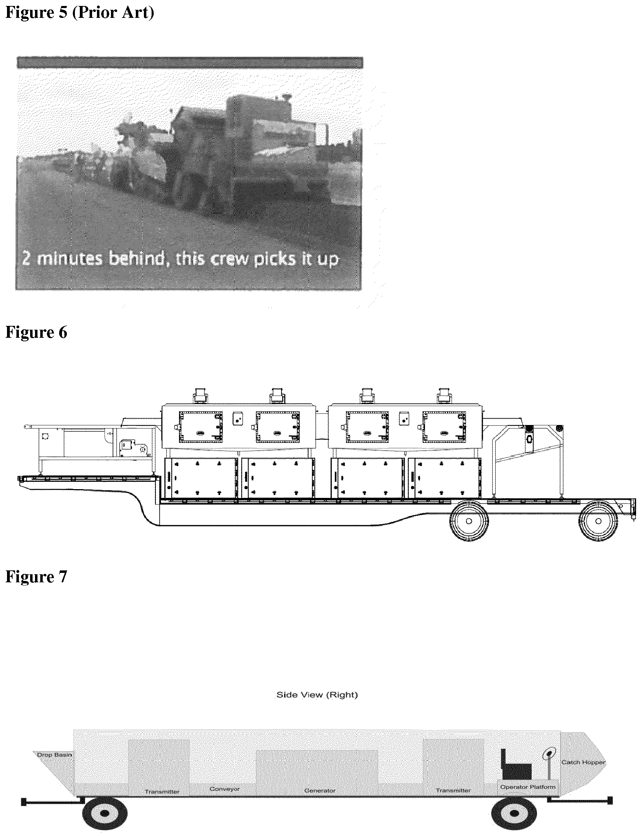

The process using an existing CIR equipment train is shown in Figure 4. This equipment removes old pavement, or pavement and base material, directly from the roadway. The pavement material is removed and conveyed to a blending station where up to two different new engineered asphalt emulsion binders are infused, the injected material is then dropped back to the ground. The process happens while the equipment train is moving down the road. After the large equipment train a smaller "pickup" unit follows removing the injected material from the roadway and dropping it into a paver to be reinstalled on the roadway (Figure 5).

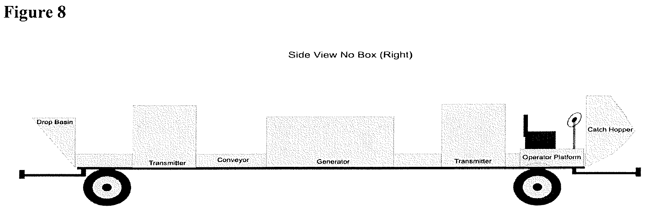

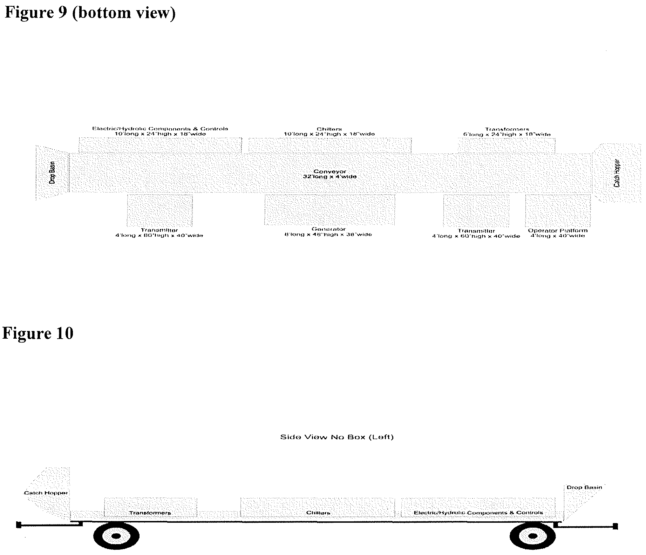

The models shown in Figures 6-10 show configurations of the MLEHS microwave processor that can be plugged into the train of equipment after the pickup machine and just before the paver. As the pick-up machine shown in Figure 5 removes the injected recycled asphalt pavement ("RAP") from the ground it is conveyed up and placed directly on the conveyor at the front of the MLEHS. The injected RAP is heated as it passes through the MLEHS to the designed performance HMA mix specification for the region. The high performance HMA exits the MLEHS and is dropped directly into a paver for even distribution on the roadway. A compaction roller follows the paver to compact the HMA to the correct compaction level. Other possible MLEHS configurations include mounting the Microwave unit on top of the paver or attached to the recycle pug mill where the new emulsion is introduced.

The MLEHS device shown in Figure 6 includes four microwave transmitter units with internally located splitter/wave guides that direct microwave energy from each transmitter into two rotary head heating chambers per transmitter using about 2.4 or 915 MHz (low energy heating system). However, different numbers of microwave transmitters can be used based on the application. For example, up to ten or more microwave transmitters can be used, with internally located splitter/wave guides that direct microwave energy from each transmitter into two rotary head heating chambers.

The MLEHS device will be pulled by a small semi-tractor with operator station to the left or right off center to accommodate the material conveyor. The injected RAP material is feed in one end onto a conveyor, processed, and then deposited directly into the paver from the other end. This unit uses its own on board generator for a power source. The combined generator and microwave power usage is approx. 235 kW (800,000 BTU's per hour) (only a fraction of the 4820 kW (16 Million BTU's/HR) for the HIR equipment) while producing high performance HMA.

The mobile LEHS can have an operator station built in so it is totally maneuverable. Additional views are shown in Figures 7-10; Figure 10 shows the device without the microwave units.

The above MLEHS has the ability to be utilized in a train or as a mobile/temporary asphalt plant when used in conjunction with the crushing and injection system as pictured on the previous page in the equipment train. This high performance HMA plant would take up little space while producing little to no particulate or voc emissions as shown below. The plant could be set up on site for any large scale remove and replace of roadways or parking lots.

Using bid tabulations from 2012 taken from county projects in Minnesota, the typical bid price for 10.16 centimeters (4-inch) deep CIR is $2.27/square meter($1.90/square yard), with the emulsion costing an additional $5/square meter($4.20/square yard) (3% addition rate) for a total price of $7.30/square meter($6.10/square yard). Using a $60/ton price for traditional HMA, and $2/square meter ($2/square yard) for 10.16 centimeters (4-inch) deep milling, the total price for a 10.16 centimeters (4-inch) mill and overlay would be $18.50/square meter ($15.50/square yard).

From this cost comparison it can be seen why CIR is a desirable approach for pavement rehabilitation when the other factors influencing the decision (geometrics, pavement height, vertical clearances, etc.) allow it to be considered. Because CIR is typically only given about 70% of the structural value of HMA, and is not considered suitable for a final wearing surface, a 3.8 to 5.1 centimeters (1.5 to 2.0 inch) of traditional HMA overlay is typically placed over the CIR as the final surface, adding an additional $5.50 - $6.75 to the price, resulting in a total price of $13.90-15.40/square meter ($11.60-$12.85/square yard). The present invention yields costs similar to below traditional CIR, in part because the resulting product is superior to HMA it eliminates the need for the traditional HMA overlay.

Low Energy Asphalt System (LEAS) HMA for has been tested in comparison to Superior Performing Asphalt Pavements ("Superpave") standard developed for the U.S. Department of Transposition, Federal Highway Commission and used for all paving projects that are funded in a whole or in part by federal funds. The principal measurement used for the evaluation of HMA is the tensile strength ratio ("TSR") which is used to predict the durability of the HMA. Some southern states, notably Texas and Louisiana, have replaced the TSR measurement with the Hamburg Rut Test measurement as HMA laid at elevated temperatures can become brittle. The following table shows the results of testing performed on LEAS HMA against the foregoing standards.

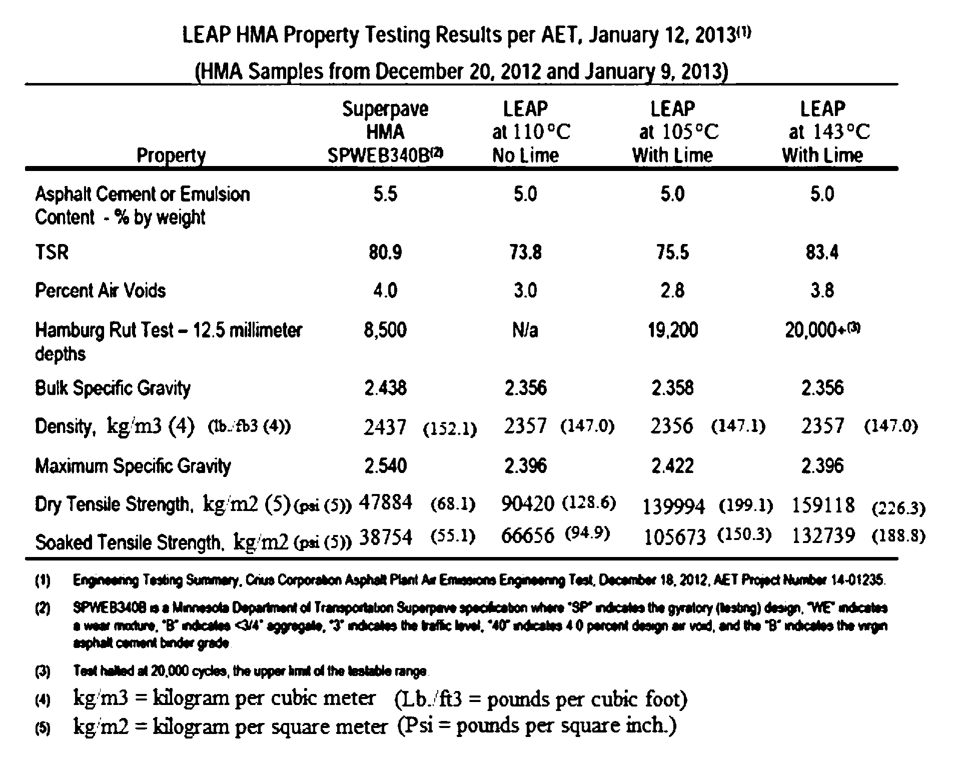

The Superpave specification, and most derivative state specifications, do not permit the use of more than 25 to 50 percent RAP within the HMA mix design due to the inability of traditional batch and drum HMA plants to sufficiently heat the aggregate within the RAP to temperatures necessary to meet the minimum TSR specifications without forming excess smoke emissions and particulate matter which violates standard air permits. The HMA produced using LEAS production process meets or exceeds the min TSR specification for most states while using 100% RAP and produces virtually zero emissions or particulate matter.

**Minimum TSR for Select State DOT Specifications**

| TSR (Minimum) | States |
|---|---|
| 85% | MS (with 1% lime) |
| 80% | VA, OR, FL, AL, NM, OK, SD, IA, NY, GA, AR, MN |
| 70% | CA, NV, MO, CO |
| 60% | AZ |
| Hamburg Rut Test | TX, LA, UT |

Several of the southern states have moved to the Hamburg Rut Test for a more robust measurement of durability of the HMA. Virgin asphalt cement had two primary chemical components, asphaltenes and maltenes. Asphaltenes are hard materials that provide the mechanical strength while maltenes are the oily fraction that functions as the sticky component in HMA. Maltenes oxidize with age or excess heat to form asphaltenes that causes the HMA to become hard and brittle. The aged or heat damaged HMA cracks under heavy loads causing failures of the road surface. The Hamburg Rut Test is performed using a wheel that passed over an HMA sample until the ensuing rut exceeds 12.5 millimeters in depth. Southern states, where summer paving temperatures can prematurely age the HMA, have been transitioning to the Hamburg Rut Test as a proxy measurement to ensure that the maltene fraction was not damaged during application. This test is an important benchmark for LEAS HMA as the asphalt cement within RAP has been aged, and traditional HMA using RAP is excess of 25 percent had a proclivity to fail early due to the relative lack of maltenes.

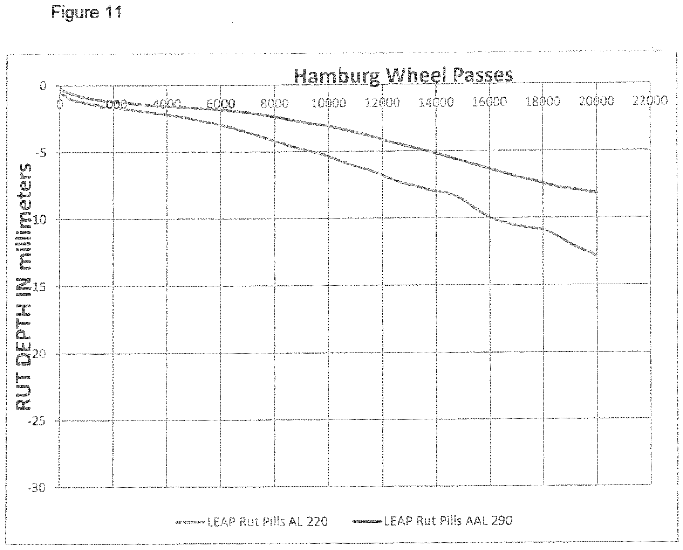

The graph (Figure 11) shows the results for testing of two variations of the LEAS HMA.

LEAS Rut Test results far surpass Rut Test results for the best performing HMA products, especially when you consider the RAP used was never designed for loading anywhere near this level (tensile<60).

The light grey line represents material that was heated to 105°C (220 degrees); the dark grey line was heated to 143 degrees Celsius (290 degrees). Conventional Superpave HMA fails at 8500 passes, while the LEAS HMA exceeded 20,000 cycles in some cases without failure.
Opportunities for Hot in Place Recycling Using Microwave Technology Laboratory testing has shown that blending 100% recycled asphalt pavement (RAP) with 4-5% LEAS asphalt emulsion and heating it to 121-149°C (250-300 degrees Fahrenheit) through the MLEHS can produce an asphalt product with equal or better materials properties than new hot-mix asphalt (HMA). The microwave MLEHS unit designed for use in the CIR paving train converts the process into an HMA processing train. The addition of heat will allow the CIR material to be placed at density similar to HMA and the performance results prove the finished surface will be comparable to or better than conventional HMA.

The MLEHS unit requires the addition of engineered emulsion rates from about 4-8% (5% in the CIR and up to 8% for the FDR) in the CIR or FDR injection process to produce high performance LEAS HMA. At 5% emulsion content, the cost would increase from $7.30/square meter ($6.10/square yard) (for CIR) to $10.8/square meter ($9.00/square yard) (HIR). It appears that the HIR using microwave technology for heating will be a cost effective alternative since the MLEHS heating can be applied for less than $7.80/square meter ($6.50/square yard) (equipment and energy costs).

Currently there are 13866430 lane kilometers (8,616,200 lane miles) of pavement in the United States, including 470893 lane kilometers (292,599) in the kilometers (miles) state of Minnesota. In Minnesota, 40% of those roadway kilometers (miles) are paved with asphalt, with 2% being concrete, and 58% having gravel or dirt surfacing. Statistics on the surfacing of all of the paved roadways in the US are not readily available, but if the percentage of surface types are similar to MN (a reasonable assumption) there are approximately 5546572 lane kilometer (3,446,480 lane miles) of asphalt surfaced roadways. The average life cycle for an asphalt pavement between rehabilitation is 20 years (5-12 years in high traffic volume urban environments and 15-30 years in residential and low traffic volume rural environments), meaning there is a potential market of approximately 281635 lane kilometer (175,000 lane miles) per year (1030108908 square meter) ((1,232,000,000 square yards)) for pavement reclamation as a potential rehabilitation approach. The financial impact of pavement rehabilitation in-place providing performance of new HMA is staggering.

Emission testing shown below was performed for particulate and volatile organic carbon ("VOC") testing of the exhaust from an indoor LEHS system inside. The summary of which is included below.

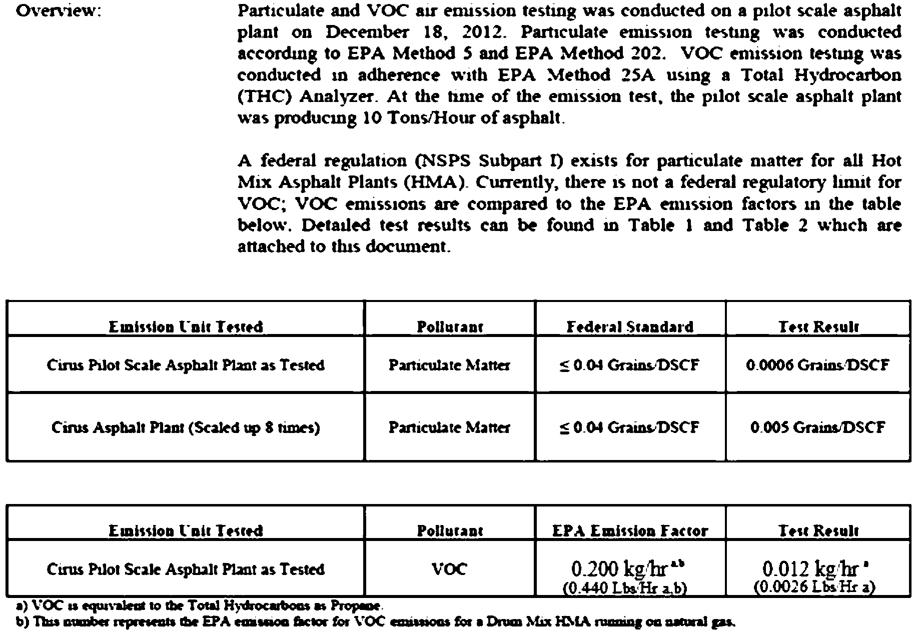

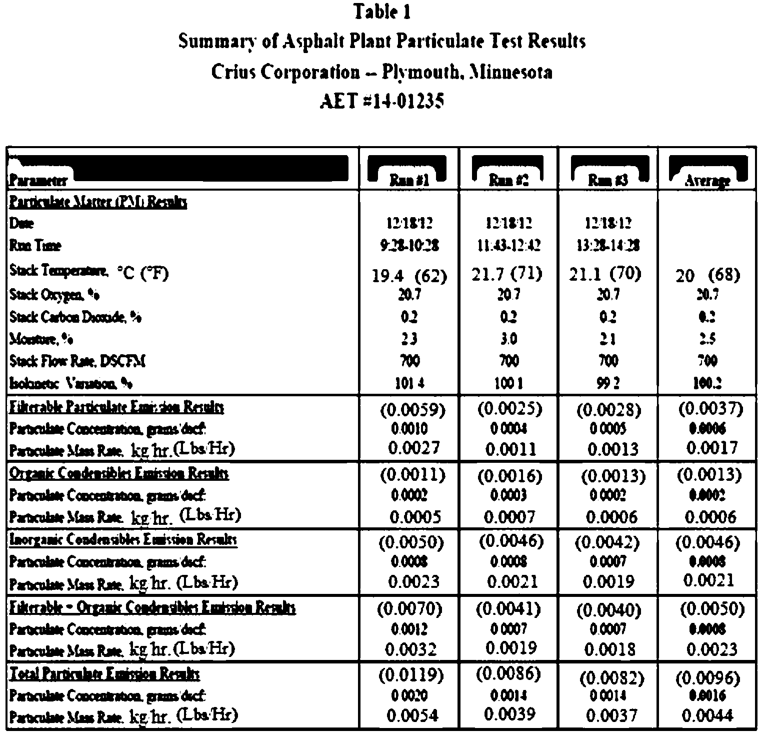

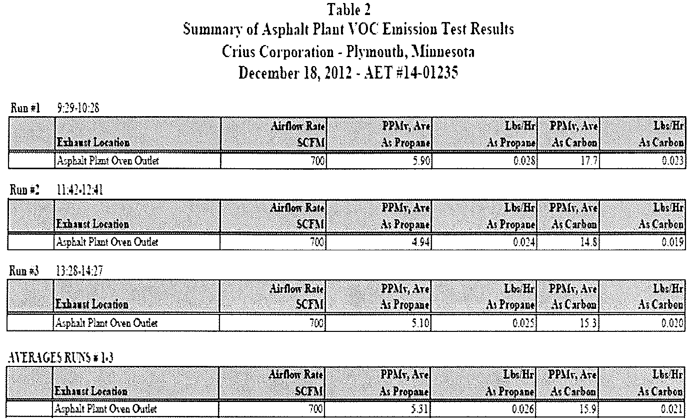

(In Table 2, the values of emission As Propane in Lbs/Hr being 0.028, 0.024, 0.025, 0.026 are equivalent to 0.0127, 0.0109, 0.0113, 0.0118 kg/hr respectively. The values of emission As Carbon in Lbs/Hr being 0.023, 0.019, 0.020, 0.021 are equivalent to 0.0104, 0.0086, 0.0091, 0.0095 kg/hr respectively). The pollution testing results indicate the LEAS plant will fall well below the required emission standards for HMA production. These results demonstrate that the LEAS plants are suitable for locations that are outside the reach of conventional HMA plants in most states due to pollution and air quality regulations.

While the foregoing written description of the invention enables one of ordinary skill to make and use what is considered presently to be the best mode thereof, those of ordinary skill will understand and appreciate the existence of variations, combinations, and equivalents of the specific embodiment, method, and examples herein. The invention should therefore not be limited by the above described embodiment, method, and examples, but by all embodiments and methods within the scope of the invention.

## Claims

1. A mobile asphalt recycling plant for producing a high performance hot mix asphalt product comprising recycled asphalt pavement material and an asphalt emulsion added to the recycled asphalt pavement material in which the mobile asphalt recycling plant comprises a mobile low energy microwave heating system for processing the recycled asphalt pavement material mixed with the asphalt emulsion, **characterised in that** the mobile low energy microwave heating system includes four or more microwave transmitter units which are in a series with a splitter/wave guides that direct microwave energy from each transmitter into two rotary head heating chambers using 2.4 or 915 MHz.

2. A mobile asphalt recycling plant according to claim 1, further comprising a generator for powering the mobile low energy microwave heating system.

3. A mobile asphalt recycling plant according to any preceding claim, **characterised in that** the mobile low energy microwave heating system heats the recycled asphalt pavement material to between 104°C to 171°C (220°F to 340°F).

4. A mobile asphalt recycling plant according to any preceding claim, further comprising a conveyor for moving the recycled asphalt pavement material through the mobile low energy microwave heating system.

5. A mobile asphalt recycling plant according to any preceding claim, further comprising a mobile asphalt pick-up machine for removing asphalt pavement material from a roadway to be used by the mobile low energy microwave heating system.

6. A mobile asphalt recycling plant according to claim 5, further comprising a mobile blending station for injection of asphalt emulsion into the recycled asphalt pavement material.

7. A mobile asphalt recycling plant according to claim 5 or claim 6, further comprising a mobile paver for receiving the heated recycled asphalt pavement material mixed with the asphalt emulsion and installing it on the roadway.

8. A method for producing a high performance hot mix asphalt product using a mobile asphalt recycling plant according to any preceding claim, comprising the steps of:
removing asphalt pavement material from a roadway;
conveying the asphalt pavement material to a blending station where up to two different new engineered asphalt emulsion binders are infused;
heating the injected recycled asphalt pavement material as it passes through the mobile low energy microwave heating system to the designed high performance hot-mix asphalt product;
dropping back the injected recycled asphalt pavement material on the roadway.

## Patentansprüche

1. Mobile Asphaltwiederverwertungsanlage zum Erzeugen eines heißgemischten Hochleistungsasphaltsprodukts, das wiederverwertetes Asphaltbelagmaterial und eine dem wiederverwerteten Asphaltbelagmaterial hinzugefügte Asphaltemulsion enthält, wobei die mobile Asphaltwiederverwertungsanlage ein mobiles Niedrigenergie-Mikrowellenheizsystem zum Verarbeiten des mit der Asphaltemulsion gemischten wiederverwerteten Asphaltbelagmaterials umfasst, **dadurch gekennzeichnet, dass** das mobile Niedrigenergie-Mikrowellenheizsystem vier oder mehr Mikrowellensendeeinheiten enthält, die in einer Reihe mit Wellenteilern/Wellenleitern angeordnet sind, die Mikrowellenenergie von jedem Sender in zwei Drehkopf-Heizkammern, die 2,4 oder 915 MHz verwenden, lenken.

2. Mobile Asphaltwiederverwertungsanlage nach Anspruch 1, die ferner einen Generator umfasst, um das mobile Niedrigenergie-Mikrowellenheizsystem mit Leistung zu versorgen.

3. Mobile Asphaltwiederverwertungsanlage nach einem vorhergehenden Anspruch, **dadurch gekennzeichnet, dass** das mobile Niedrigenergie-Mikrowellenheizsystem das wiederverwertete Asphaltbelagmaterial auf eine Temperatur im Bereich von 104 °C bis 171 °C (220 °F bis 340 °F) erhitzt.

4. Mobile Asphaltwiederverwertungsanlage nach einem vorhergehenden Anspruch, die ferner eine Fördereinrichtung enthält, um das wiederverwertete Asphaltbelagmaterial durch das mobile Niedrigenergie-Mikrowellenheizsystem zu bewegen.

5. Mobile Asphaltwiederverwertungsanlage nach einem vorhergehenden Anspruch, die ferner eine mobile Asphaltaufnahmemaschine enthält, um Asphaltbelagmaterial, das von dem mobilen Niedrigenergie-Mikrowellenheizsystem verwendet werden soll, von einer Fahrbahn abzunehmen.

6. Mobile Asphaltwiederverwertungsanlage nach Anspruch 5, die ferner eine mobile Mischstation enthält, um Asphaltemulsion in das wiederverwertete Asphaltbelagmaterial einzuleiten.

7. Mobile Asphaltwiederverwertungsanlage nach Anspruch 5 oder nach Anspruch 6, die ferner eine mobile Belagaufbringvorrichtung enthält, um das erhitzte wiederverwertete Asphaltbelagmaterial, das mit der Asphaltemulsion vermischt ist, aufzunehmen und es auf der Fahrbahn anzubringen.

8. Verfahren zum Herstellen eines heißgemischten Hochleistungsasphaltprodukts unter Verwendung einer mobilen Asphaltwiederverwertungsanlage nach einem vorhergehenden Anspruch, das die folgenden Schritte umfasst:
Abnehmen von Asphaltbelagmaterial von einer Fahrbahn;
Befördern des Asphaltbelagmaterials zu einer Mischstation, wo bis zu zwei unterschiedliche, neu hergestellte Asphaltemulsions-Bindemittel infundiert werden;
Erhitzen des eingeleiteten wiederverwerteten Asphaltbelagmaterials, während es sich durch das mobile Niedrigenergie-Mikrowellenheizsystem bewegt, zu dem geplanten heißgemischten Hochleistungsasphaltprodukt;
Zurückfallenlassen des eingeleiteten wiederverwerteten Asphaltbelagmaterials auf die Fahrbahn.

## Revendications

1. Une installation mobile de recyclage d'asphalte pour produire un produit haute performance de mélange à chaud d'asphalte comprenant un matériau de revêtement en asphalte recyclé et une émulsion d'asphalte ajoutée au matériau de revêtement en asphalte recyclé dans laquelle l'installation mobile de recyclage d'asphalte comprend un système de chauffage par micro-ondes basse énergie pour le traitement du matériau de revêtement en asphalte recyclé mélangé avec l'émulsion d'asphalte, **caractérisée en ce que** le système mobile de chauffage par micro-ondes basse énergie inclut quatre ou plus de quatre dispositifs de transmission de micro-ondes qui sont en série avec un répartiteur / guides d'onde qui dirigent l'énergie micro-onde depuis chaque unité de transmission vers deux chambres de chauffage à tête rotative utilisant 2.4 ou 915 MHz.

2. Une installation mobile de recyclage d'asphalte selon la revendication 1, comprenant en outre un générateur pour alimenter le système de chauffage par micro-ondes basse énergie.

3. Une installation mobile de recyclage d'asphalte selon l'une quelconque des revendications précédentes, **caractérisée en ce que** le système de chauffage par micro-ondes basse énergie chauffe le matériau de revêtement en asphalte recyclé à une température entre 104°C et 171°C (entre 220°F et 340°F).

4. Une installation mobile de recyclage d'asphalte selon l'une quelconque des revendications précédentes, comprenant en outre un convoyeur pour déplacer le matériau de revêtement en asphalte recyclé à travers le système de chauffage par micro-ondes basse énergie.

5. Une installation mobile de recyclage d'asphalte selon l'une quelconque des revendications précédentes, comprenant en outre une machine mobile de ramassage de l'asphalte pour enlever d'une route le matériau de revêtement en asphalte à utiliser dans le système de chauffage par micro-ondes basse énergie.

6. Une installation mobile de recyclage d'asphalte selon la revendication 5, comprenant en outre une station mobile de mélange pour l'injection de l'émulsion d'asphalte dans le matériau de revêtement en asphalte recyclé.

7. Une installation mobile de recyclage d'asphalte selon les revendications 5 ou 6, comprenant en outre un finisseur mobile pour recevoir le matériau de revêtement en asphalte recyclé chauffé mélangé avec l'émulsion d'asphalte et le poser sur la route.

8. Une méthode pour produire un produit haute performance de mélange à chaud d'asphalte utilisant une installation mobile de recyclage d'asphalte selon l'une quelconque des revendications précédentes, comprenant les étapes de :
retrait du matériau de revêtement en asphalte d'une route ;
transport du matériau de revêtement en asphalte à une station de mélange où jusqu'à deux liants différents d'émulsion d'asphalte nouvellement conçus sont introduits ;
chauffage du matériau de revêtement injecté en asphalte recyclé lorsqu'il traverse le système de chauffage par micro-ondes basse énergie jusqu'au produit haute performance élaboré de mélange à chaud d'asphalte ;
dépôt du matériau de revêtement injecté en asphalte recyclé sur la route.
